# EUROPÄISCHE PATENTSCHRIFT

(11) **EP 1 151 656 B1**
(45) Veröffentlichungstag und Bekanntmachung des Hinweises auf die Patenterteilung: **30.05.2007**
(21) Anmeldenummer: 01109267.3
(22) Anmeldetag: 14.04.2001
(51) Int. Cl.: A01D 67/00

(54) **Selbstfahrende Erntemaschine, inbesondere Feldhäcksler**
Self-propelled harvester especially forage harvester
Récolteuse automotrice en particulier faucheuse-hacheuse

(30) Priorität: 04.05.2000 DE 20007795 U
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr.-Ing.E.h., 48480 Spelle (DE); Radke, Karl-Heinz, Dipl.-Ing., 02681 Wilthen (DE)
(74) Vertreter: Busse & Busse Patentanwälte

(56) Entgegenhaltungen:
- DE-A- 1 755 070
- DE-A- 2 237 106
- DE-A- 3 346 309
- DE-A- 3 418 721
- DE-A- 3 834 693

## Beschreibung

Die Erfindung bezieht sich auf eine selbstfahrende Erntemaschine, insbesondere einen selbstfahrenden Feldhäcksler zum Aufnehmen und Häckseln von Erntegut wie Mais, Grüngut und dergleichen in einer Ausbildung gemäß dem Oberbegriff des Anspruchs 1.

Aus der DE-A-38 34 693 ist ein landwirtschaftlicher Schlepper bekannt, dessen Vorderachse als lenkbare starre Achse ausgebildet ist, die am Schlepperrahmen um eine horizontale, fahrtrichtungsparallele Achse pendelbar abgestützt ist. Dazu ist der Achskörper der Vorderachse an einem Querlenker pendelbar abgestützt, der seinerseits über eine Dämpfer und andererseits über eine Stützstrebe mit dem Schlepperrahmen zu verbinden ist. Dabei ist der Querlenker der Vorderachse in Fahrtrichtung des Schleppers vorgeordnet und unmittelbar vor dieser gelegen. Um Schub- und Zugbeanspruchungen standhalten zu können, ist die Vorderachse zusätzlich noch über einen Längslenker mit dem Schlepperchassis verbunden. Damit lassen sich nur begrenzt Schub- und Zugbeanspruchungen aufnehmen. Insbesondere bei schweren Schlepperarbeiten mit erheblichen Bodenunebenheiten auch in Fahrtrichtung des Schleppers hat der Längslenker entsprechend an der Vorderachse auftretende Stützkräfte aufzunehmen, so daß der Längslenker entsprechend stark auszulegen ist.

Es ist Aufgabe der vorliegenden Erfindung, eine selbstfahrende Erntemaschine der eingangs genannten Art dahingehend zu verbessern, daß die Achskonstruktion platzsparend ist und zugleich robust.

Zur Lösung dieser Aufgabe zeichnet sich die selbstfahrende Erntemaschine durch die im Anspruch 1 angegenen Merkmale aus. Hinsichtlich weiterer Ausgestaltungen wird auf die Ansprüche 2 bis 5 verwiesen.

Durch die Abfederung der Hinterachse ergibt sich in Verbindung mit ihrer pendelbaren Abstützung ein sehr gutes Fahrverhalten, da unter allen Bedingungen die Lenkräder Bodenkontakt behalten, den Lauf der Maschine störende Rückwirkungen von Bodenunebenheiten weitgehend vermieden werden und so höhere Fahrgeschwindigkeiten möglich sind, ohne Bodenabtastvorgänge frontseitig angeordneter Arbeitsgeräte wie beispielsweise Adapter an Feldhäckslern nachteilig zu beeinflussen. Durch die besondere Abstützung des Achskörpers an der diesen übergreifenden Querschwinge beansprucht die Achsabstützung nur geringen Raum. Zusätzlich bietet die Querschwinge aufgrund ihrer den Achskörper übergreifenden Bauart eine Abstützung für den Achskörper, und zwar in und entgegen der Fahrtrichtung der Maschine. Damit kann diese Querschwinge auch Zug- und Schubbeanspruchungen aufnehmen und entsprechend groß dimensioniert sein, obgleich nur ein relativ geringer Einbauraum benötigt wird.

Zusätzlich kann noch vorgesehen sein, daß die Abstrebung der Querschwinge einen außermittigen, auf Zug beanspruchten Längslenker hat, wobei dann der Mittelbereich für andere Aggregate freibleiben kann, während gleichzeitig kraftgünstige Verhältnisse zu erzielen sind. In vielen Anwendungsfällen kann aufgrund der übergreifenden Ausbildung der Querschwinge jedoch auf Längslenker verzichtet werden.

Weitere Einzelheiten und Wirkungen ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Seitenansicht einer als Feldhäcksler ausgebildeten selbstfahrenden Erntemaschine nach der Erfindung,
- Fig. 2: eine perspektivische, bereichsweise abgebrochene Ansicht auf einen Teil der Erntemaschine zur Veranschaulichung der Hinterachsausbildung und -abstützung,
- Fig. 3: eine bereichsweise aufgebrochene Explosionsdarstellung von Maschinenrahmen und Hinterachse, und
- Fig. 4: schematische Darstellungen der Hinterachse bei unterschiedlichen Bodenverhältnissen.

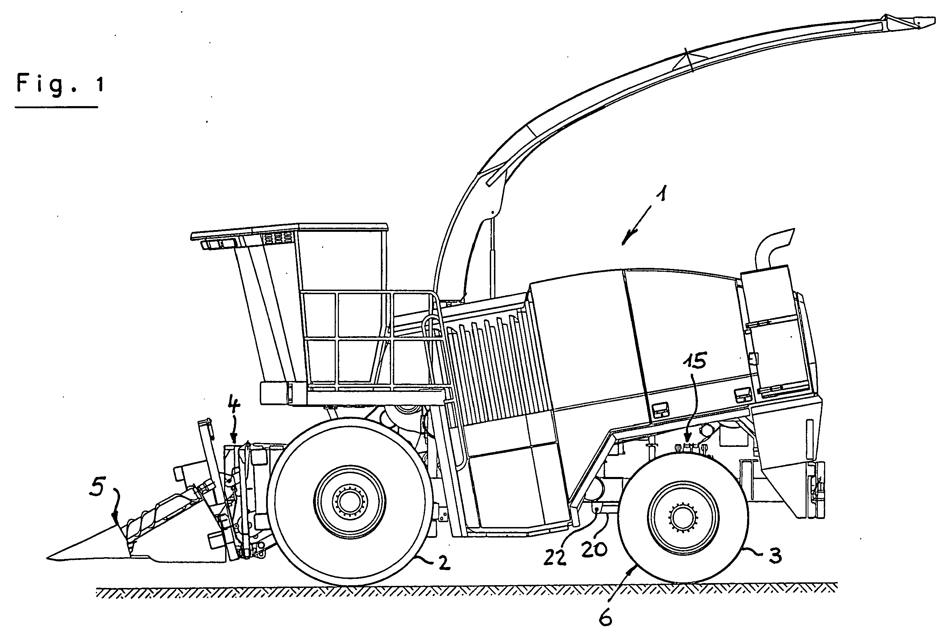

Die Fig. 1 veranschaulicht einen selbstfahrenden Feldhäcksler 1 als selbstfahrende Erntemaschine, die sich über vorderachsseitige Lauf- und Antriebsräder 2 und über hinterachsseitige Lauf- und Lenkräder 3 auf dem Boden abstützt. Angeschlossen an eine Adaptervorrichtung 4 ist beispielsweise ein Maisgebiß 5, das sich im Erntebetrieb ebenso wie die Adaptervorrichtung 4 auf dem Boden abstützen und diesen abtasten kann. Anstelle des selbstfahrenden Feldhäckslers 1 kann beispielsweise auch ein selbstfahrender Mähdrescher, eine selbstfahrende Kartoffelerntemaschine oder ähnliche Maschinen für die Verwirklichung der Erfindung in Betracht kommen.

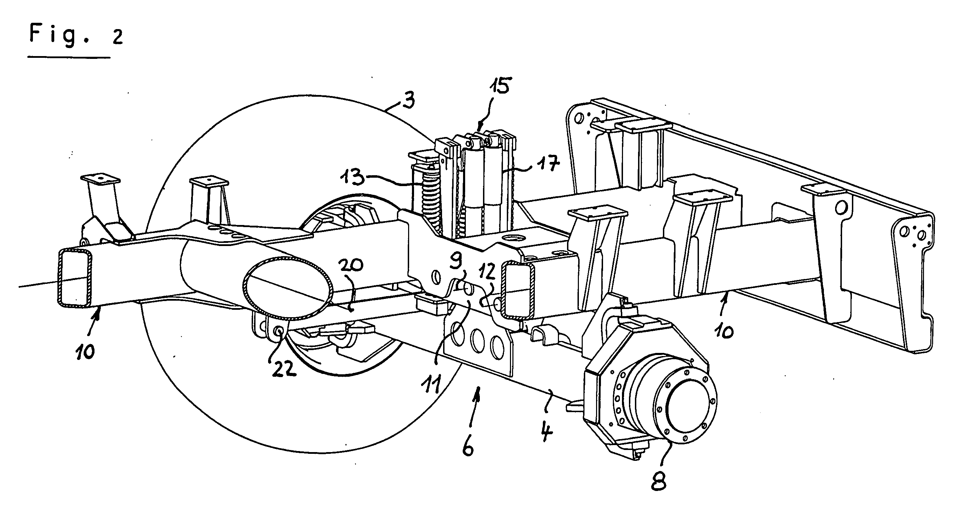

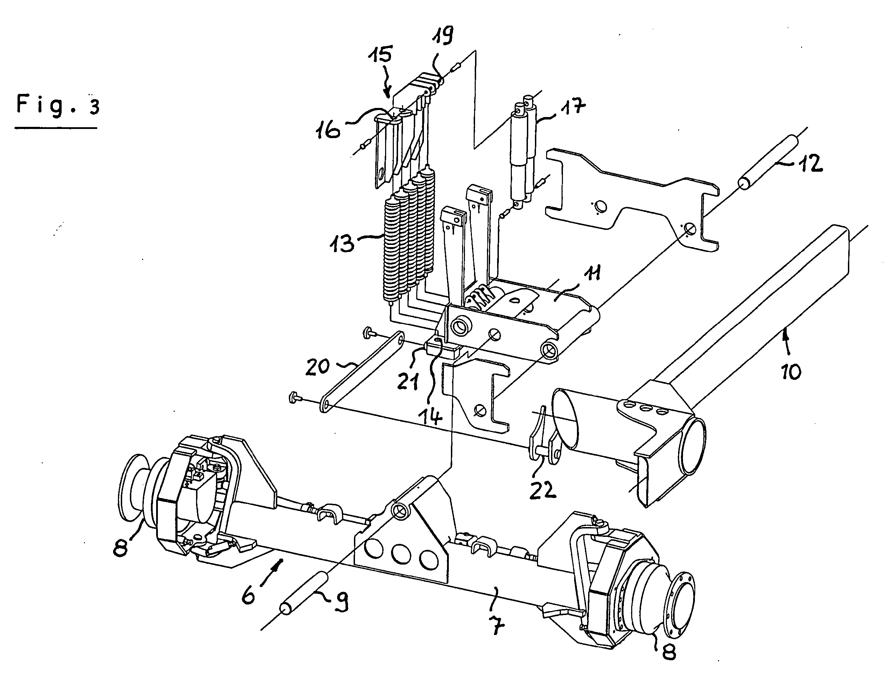

Die die Hinterräder 3 führende, als lenkbare Starrachse ausgebildete Hinterachse 6 umfaßt, wie am besten den Fig. 2 und 3 entnommen werden kann, einen starren Achskörper 7, an dem gelenkig Radköpfe 8 für den Anschluß der Hinterräder 3 angebracht sind. Der Achskörper 7 ist um eine horizontale, fahrtrichtungsparallele Pendelachse 9 (und dementsprechend in einer Ebene quer zur Fahrtrichtung der Maschine) pendelbar am Maschinenrahmen 10 abgestützt und dabei zugleich relativ zum Maschinenrahmen federnd auf und ab beweglich abgestützt, so daß die Hinterräder auch bei größeren Bodenunebenheiten in Bodenkontakt bleiben.

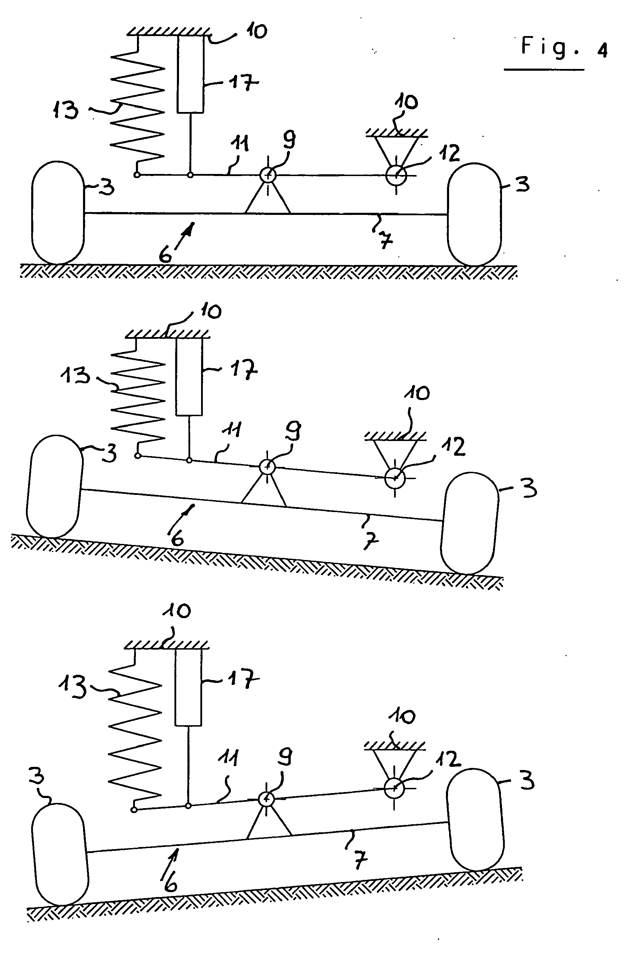

Im einzelnen ist der Achskörper 7 an einer diesen in Betriebsstellung übergreifenden Querschwinge 11 pendelbar gelagert, die um eine zur Pendelachse 9 des Achskörpers 7 parallele Schwenkachse 12 am Maschinenrahmen 10 schwenkbar angelenkt ist und an ihrem freien Ende sich über ein Feder- und Dämpfungsglied am Maschinenrahmen 10 abstützt. Das Federglied besteht bei dem dargestellten Ausführungsbeispiel bevorzugt aus einer Mehrzahl von z.B. vier parallel zu einem Federpaket zusammengefaßten Spiraldruckfedern 13, die von der Oberseite der Querschwinge 11 her an dieser angreifen. Für die dem Betrachter in Fig. 3 nächstliegende Spiraldruckfeder 13 ist der Angriffspunkt mit 14 bezeichnet. An ihrer Oberseite greifen die Spiraldruckfedern 13 an einer Konsole 15 an, wobei der Anschlußpunkt der in Fig. 4 dem Betrachter nächstgelegenen Spiraldruckfeder 13 mit 16 bezeichnet ist. Die Konsole 15 ist am Maschinenrahmen 10 festgelegt, z.B. mit diesem verschraubt oder verschweißt.

Als Dämpfungsglied ist eine Anzahl von z.B. zwei hydraulischen Stoßdämpfern 17 vorgesehen, die parallel an der Oberseite der Querschwinge 11 bei 18 angreifen und sich ebenfalls an der Konsole 15 bei 19 abstützen.

Ebenfalls am freien Ende der Querschwinge greift bei 21 ein Längslenker 20 gelenkig an, der der Querschwinge 11 in Fahrtrichtung vorgeordnet ist und an seinem in Fahrtrichtung vorderen Ende bei 22 am Maschinenrahmen 10 angreift. Der Längslenker 20 bildet eine Zugstrebe, die im übrigen im Abstand zur vertikalen Längsmittelebene des Maschinenrahmens 10, die mit der Pendelachse 9 zusammenfällt, angeordnet ist.

Die Hinterachskonstruktion ist überaus platzsparend, arbeitet präzise und ist dabei zugleich robust. Die Abstrebung der Querschwinge 11, die ein verwindungssteifes Bauteil bildet, läßt den Mittelbereich unterhalb des Maschinenrahmens 10 für andere Aggregate frei und ist zudem überaus kraftgünstig.

Die Fig. 4 veranschaulicht in schematischer Form die Arbeitsweise der Hinterachse 6 und die Stellung der Teile bei drei unterschiedlichen Bodenverhältnissen. Die Abbildungen veranschaulichen den auch bei starken Höhenunterschieden zwischen den Hinterrädern 3 aufrechterhaltenen Bodenkontakt und die Arbeit der Federn 13, die in der mittleren Abbildung erhöhten und in der unteren Abbildung herabgesetzten Druck aufnehmen.

## Patentansprüche

1. Selbstfahrende Erntemaschine, insbesondere Feldhäcksler, zum Aufnehmen und Häckseln von Erntegut wie Mais, Grüngut u. dgl., mit einer als lenkbare starre Achse ausgebildeten, am Maschinenrahmen (1) um eine horizontale, fahrtrichtungsparallele Pendelachse (9) pendelbar abgestützten Achse (6), deren Achskörper (7) unter Abfederung gegenüber dem Maschinenrahmen (10) relativ zu diesem auf- und abbeweglich abgestützt ist, wobei der Achskörper (7) an einer Querschwinge (11) pendelbar gelagert ist, die um eine zur Pendelachse (9) des Achskörpers (7) parallele Schwenkachse (12) am Maschinenrahmen (10) angelenkt und an ihrem freien Ende über ein Feder- und Dämpfungsglied am Maschinenrahmen (10) abgestützt ist, **dadurch gekennzeichnet, daß** die pendelbar abgestützte Achse die Hinterachse (6) der Erntemaschine ist, daß die Querschwinge (11) den Achskörper (7) im Bereich seiner Pendelachse übergreift.

2. Maschine nach Anspruch 1, **dadurch gekennzeichnet*,* daß** als Federglied eine Mehrzahl von parallel angeordneten, ein Federpaket bildenden Spiraldruckfedern (13) vorgesehen ist, die oberseitig an der Querschwinge (11) angreifen.

3. Maschine nach Anspruch 1 oder 2, **dadurch gekennzeichnet, daß** als Dämpfungsglied eine Mehrzahl von untereinander und zu den Spiraldruckfedern (13) parallel angeordneten hydraulischen Stoßdämpfern, (17) vorgesehen ist.

4. Maschine nach einem der Ansprüche 1 bis 3, **dadurch gekennzeichnet, daß** am freien Ende der Querschwinge (11) ein dieser in Fahrtrichtung vorgeordneter Längslenker (20) gelenkig angreift, der an seinem in Fahrtrichtung vorderen Ende am Maschinenrahmen (10) angelenkt ist.

5. Maschine nach Anspruch 4, **dadurch gekennzeichnet, daß** der Längslenker (20) im Abstand zur vertikalen Längsmittelebene des Maschinenrahmens (10) gelegen ist.

## Claims

1. Self-propelled harvester, in particular a forage harvester, for picking up and chopping harvested crops such as maize, green forage and the like, having an axle (6) which is in the form of a steerable rigid axle and is supported on the chassis (1) of the harvester in such a way as to be able to rock about a horizontal axis and shaft (9), for rocking movement, which is parallel to the direction of travel, the beam (7) of which axle (6) is supported relative to the chassis (10) of the harvester by sprung suspension to be able to move up and down relative to the said chassis (10), the axle beam (7) being rockably mounted on a transverse pivoting cradle (11), the said transverse pivoting cradle (11) being hinged to the chassis (10) of the harvester about a pivot axis and shaft (12) parallel to the axis and shaft (9) for rocking movement of the axle beam (7) and being supported at its free end on the chassis (10) of the harvester by means of a spring and damping unit, **characterised in that** the axle which is supported in such a way as to be able to rock is the rear axle (6) of the harvester and **in that** the transverse pivoting cradle (11) engages over the axle beam (7) in the region of the latter's axis and shaft for rocking movement.

2. Harvester according to claim 1, **characterised in that** what is provided as the spring unit is a plurality of compression coil springs (13) which are arranged in parallel and form a bank of springs and which engage with the top of the transverse pivoting cradle (11).

3. Harvester according to claim 1 or 2, **characterised in that** what is provided as the damping unit is a plurality of hydraulic shock absorbers (17) which are arranged parallel to one another and to the compression coil springs (13).

4. Harvester according to one of claims 1 to 3, **characterised in that** there is hingeably engaged with the free end of the transverse pivoting cradle (11) a longitudinal link (20) which is positioned in front of the said cradle and which is articulated to the chassis (10) of the harvester at the end of the link which is its front end in the direction of travel.

5. Harvester according to claim 4, **characterised in that** the longitudinal link (20) is situated at a distance from the vertical longitudinal centre plane of the chassis (10) of the harvester.

## Revendications

1. Machine de récolte automotrice, en particulier ramasseuse hacheuse, destinée à ramasser et à hacher une récolte telle que du maïs, du fourrage vert et analogue, comprenant un essieu (6) réalisé sous la forme d'un essieu rigide orientable, suspendu au châssis (1) de la machine, oscillant autour d'un axe d'oscillation horizontal (9) parallèle à la direction de la marche, dont le corps d'essieu (7) est suspendu au châssis (10) de la machine, mobile en élévation et descente par rapport à ce dernier avec suspension élastique, le corps d'essieu (7) étant monté oscillant sur un bras basculant transversal (11) qui est articulé au châssis (10) de la machine autour d'un axe de basculement (12) parallèle à l'axe d'oscillation (9) du corps d'essieu et qui est relié au châssis (10) de la machine à son extrémité libre par l'intermédiaire d'un organe formant ressort et amortisseur, **caractérisée en ce que** l'essieu suspendu oscillant est l'essieu arrière (6) de la machine de récolte et **en ce que** le bras basculant transversal (11) surmonte le corps d'essieu (7) dans la région de son axe d'oscillation.

2. Machine selon la revendication 1, **caractérisée en ce qu'**il est prévu comme organe formant ressort une pluralité de ressorts de compression hélicoïdaux (13) disposés parallèlement, formant un paquet de ressorts, qui attaquent le bras basculant transversal (11) à son côté supérieur.

3. Machine selon la revendication 1 ou 2, **caractérisée en ce qu'**il est prévu comme organe formant amortisseur une pluralité d'amortisseurs hydrauliques (17) disposés parallèlement entre eux et parallèlement aux ressorts de compression hélicoïdaux (13).

4. Machine selon une des revendications 1 à 3, **caractérisée en ce que** l'extrémité libre du bras basculant transversal (11) est attaquée de façon articulée par une biellette longitudinale (20) placée en avant, vu dans la direction de la marche, et qui est articulée sur le châssis (10) de la machine à son extrémité avant, vu dans la direction de la marche.

5. Machine selon la revendication 4, **caractérisée en ce que** la biellette longitudinale (20) est disposée à distance du plan médian longitudinal vertical du châssis (10) de la machine.
